Europäisches Patentamt

European Patent Office

Office européen des brevets

(11) Numéro de publication: **0 327 458**
**A1**

(12) **DEMANDE DE BREVET EUROPEEN**

(21) Numéro de dépôt: **89400290.6**

(22) Date de dépôt: **02.02.89**

(51) Int. Cl.⁴: **B 60 T 7/08**
**F 16 D 65/54**

(30) Priorité: **04.02.88 FR 8801294**

(43) Date de publication de la demande:
**09.08.89 Bulletin 89/32**

(84) Etats contractants désignés:
**AT BE CH DE ES GB IT LI LU NL SE**

(71) Demandeur: **LEBRANCHU S.A.**
**271-277 Chaussée Jules-César**
**F-95250 Beauchamp (FR)**

(72) Inventeur: **Hauguel, Fabrice**
**13 Allée Vercingétorix**
**F-95250 Beauchamp (FR)**

**Jourdan, Jean-Noel**
**12 Impasse Claude Monet**
**F-95220 Herblay (FR)**

(74) Mandataire: **Martin, Jean-Jacques et al**
**Cabinet REGIMBEAU 26, Avenue Kléber**
**F-75116 Paris (FR)**

(54) **Dispositif de commande de frein à main, notamment pour véhicule automobile.**

㉗ Pour permettre une compensation automatique d'un allongement du câble de freinage (21) par rapport à sa gaine (43), cette dernière est raccordée au support (3) du dispositif (4) de commande de frein à main par des moyens (49) autorisant le déplacement automatique de son extrémité correspondante (44) par rapport au support (3), en sens inverse du sens (29) de déplacement du câble de freinage (21) par rapport à la gaine (43) correspondant à un passage de la position de non-freinage à la position de freinage.

Il est ainsi possible d'ancrer le câble de freinage (21) dans une zone (25) fixe d'un levier (13) de commande de frein à main, et de simplifier aussi bien la structure du dispositif (4) de commande de frein à main que son montage.

FIG.1

EP 0 327 458 A1

**Description**

## DISPOSITIF DE COMMANDE DE FREIN A MAIN, NOTAMMENT POUR VEHICULE AUTOMOBILE.

La présente invention concerne un dispositif de commande de frein à main, notamment pour véhicule automobile, comportant :
- un support de montage,
- une zone d'ancrage de câble de freinage,
- des moyens manuels de déplacement de la zone d'ancrage, par rapport au support, entre une position de freinage dans laquelle est est susceptible d'être verrouillée par rapport au support et une position de non freinage,
- des moyens de raccordement d'une gaine de câble de freinage au support en un emplacement proche de la position de non-freinage, en arrière de celle-ci par rapport à un sens déterminé de déplacement de la zone d'ancrage vers la position de freinage,
- une gaine de câble de freinage présentant une première extrémité susceptible d'être raccordée au support par les moyens de raccordement et une deuxième extrémité susceptible d'être solidarisée avec un premier organe de freinage,
- un câble de freinage monté coulissant dans la gaine et présentant une première extrémité sortant de la gaine par la première extrémité de celle-ci et susceptible d'être ancrée sur la zone d'ancrage et une deuxième extrémité sortant de la gaine par la deuxième extrémité de celle-ci et susceptible d'être solidarisée avec un deuxième organe de freinage, les premier et deuxième organes de freinage appliquant aux deuxièmes extrémités respectives de la gaine et du câble une sollicitation classique tendant à faire sortir le câble de la gaine par la deuxième extrémité de celle-ci et le passage de la zone d'ancrage de la position de non-freinage à la position de freinage appliquant à la première extrémité du câble une sollicitation tendant à faire sortir le câble de la gaine par la première extrémité de celle-ci.

Un tel dispositif de commande est décrit par exemple dans le brevet français N° 2 563 483 qui décrit, à titre de moyens manuels de déplacement de la zone d'ancrage du câble de freinage, par rapport au support, un levier de commande manuelle qui est monté au pivotement sur le support autour d'un axe horizontal déterminé, peut être verrouillé de façon déverrouillable en position de freinage, de façon largement connue par ailleurs, et porte la zone d'ancrage du câble de freinage par l'intermédiaire d'une pièce montée au pivotement autour du même axe et susceptible de se déplacer angulairement autour de cet axe par rapport au levier, de façon automatique, lorsque le câble s'allonge au cours du temps, pour compenser automatiquement cet allongement de telle sorte que, en dépit de cet allongement, les positions du levier correspondant respectivement à la position de freinage et à la position de non-freinage restent sensiblement les mêmes au cours du temps.

Ce mode de compensation de l'allongement du câble de freinage au cours du temps présente l'inconvénient d'une grande complexité de réalisation, et par conséquent d'un coût élevé, en raison de la nécessité de prévoir sur le levier de manoeuvre non seulement un dispositif d'encliquetage permettant de verrouiller ce dernier en position de freinage, de façon traditionnelle, mais également des moyens de rattrapage d'allongement du câble comportant eux-mêmes d'autres moyens d'encliquetage ; en outre, l'ensemble formé par le levier de commande manuel, la pièce de liaison de celui-ci avec la zone d'ancrage et les moyens prévus pour déplacer automatiquement cette dernière en fonction de l'allongement du câble de freinage, ainsi que le dispositif d'encliquetage prévu pour verrouiller le levier de commande manuel en position de freinage, occupent à proximité immédiate de l'axe de pivotement du levier un encombrement important, dans une zone directement logée, généralement, à l'intérieur de l'habitacle du véhicule.

Un but de la présente invention est de remédier à ces inconvénients, en proposant un nouveau mode de compensation de l'allongement du câble de freinage.

Un autre but de l'invention est de permettre de disposer, si on le désire, d'une démultiplication variable dans la transmission de mouvement entre le levier de commande manuelle, constituant généralement les moyens manuels de déplacement de la zone d'ancrage du câble de freinage et ce câble lui-même en fonction de l'orientation du levier de commande, comme l'imposent certaines réglementations ; on remarque en effet que l'on ne dispose pas d'une telle possibilité dans un frein à main du type décrit dans le brevet français N° 2 563 483 ; en effet, même s'il est prévu en arrière de la zone d'ancrage du câble de freinage, si l'on se réfère au sens déterminé de déplacement de cette zone de la position de non-freinage à la position de freinage, un canal d'enroulement du câble de freinage lors du passage à la position de freinage, ce canal ce peut être utilisé à la façon d'une came présentant des zones différemment éloignées de l'axe de pivotement conjoint du levier et de la pièce portant la zone d'ancrage dans la mesure où, pour une position donnée du levier, cette zone d'ancrage peut occuper différentes positions en fonction de l'allongement du câble si bien que les effets de came éventuels se traduiraient différemment en fonction de l'allongement de ce câble.

Un autre but de l'invention est de proposer un dispositif de commande de frein à main se prêtant à une réalisation propre à limiter et faciliter les interventions de montage sur un véhicule en cours de fabrication, ou de maintenance sur un véhicule en service ; en effet, le montage d'un frein à main du type décrit dans le brevet français N° 2 563 483 nécessite des interventions pratiquement simultanées en dessous du véhicule, c'est-à-dire à l'extérieur de celui-ci, et à l'intérieur de celui-ci dans une zone peu accessible puisque située sous le levier de frein à main, ce qui est peu commode.

A cet effet, ce dispositif de commande de frein à main selon l'invention, du type indiqué en préambule, est caractérisé en ce que lesdits moyens de raccordement comportent des moyens de déplacement automatique de la première extrémité de la gaine, par rapport au support, en sens inverse dudit sens déterminé de déplacement en fonction d'un éventuel allongement du câble de freinage par rapport à la gaine, de façon à assurer une compensation automatique dudit éventuel allongement sans déplacer la zone d'ancrage par rapport aux moyens manuels de déplacement de celle-ci.

Ainsi, la compensation d'un éventuel allongement du câble de freinage s'effectue sans intervention sur la position de la zone d'ancrage de ce câble par rapport aux moyens manuels de déplacement de cette zone d'ancrage, tels qu'un levier de commande manuelle monté au pivotement sur le support, ce qui permet de simplifier considérablement ces moyens manuels de déplacement et de réduire leur encombrement à l'intérieur du véhicule, en comparaison avec ce que propose le brevet français N° 2 563 483; en particulier, lorsque les moyens manuels de déplacement de la zone d'ancrage sont constitués, comme il est traditionnel, par un levier de commande manuelle monté pivotant sur le support, ce levier peut porter de façon solidaire la zone d'ancrage du câble de freinage.

Alors, dans la mesure où la position angulaire du levier de commande manuelle autour de l'axe de pivotement, par rapport au support, et celle de la zone d'ancrage du câble de freinage sont indissociablement liées, il est possible de prévoir, lorsque le levier porte de façon solidaire, en arrière de la zone d'ancrage en référence à un sens déterminé de pivotement correspondant au passage de la position de non-freinage à la position de freinage, un canal de réception du câble de freinage comme le mentionne le brevet français N° 2 563 483, que ce canal de réception présente une forme différente d'une forme de révolution autour dudit axe déterminé, afin de constituer une came traduisant de façon non linéaire le pivotement du levier en un coulissement du câble dans la gaine; cet effet de came se conserve alors fidèlement dans le temps du fait de la fixité de la zone d'ancrage par rapport au levier.

De préférence, la première extrémité du câble présente des moyens formant une tête solidaire du câble et définissant un épaulement autour du câble, vers l'arrière en référence audit sens déterminé de déplacement, et la zone d'ancrage est constituée par une encoche ouverte vers l'avant, en référence audit sens déterminé de pivotement, et dans le sens d'un éloignement radial par rapport audit axe de pivotement et susceptible de recevoir ladite tête par emboîtement ; cette disposition, déjà avantageuse en elle-même par sa simplicité, se révèle en outre tout particulièrement intéressante lorsque, par ailleurs, le support présente en regard de la position de non-freinage, dans le sens d'un éloignement radial par rapport audit axe de pivotement, une goulotte de guidage de ladite tête dans ledit sens déterminé de déplacement, ladite goulotte présente dans le sens d'un éloignement radial par rapport audit axe de pivotement des dimensions suffisantes pour autoriser le libre passage de la tête à l'état non emboîté dans l'encoche, et le support présente à l'intérieur de la goulotte de guidage des moyens de poussée élastique de ladite tête dans le sens d'un rapprochement radial par rapport audit axe de pivotement, pour provoquer l'emboîtement de ladite tête dans l'encoche, en position de non-freinage, lors d'un déplacement de ladite tête dans ledit sens déterminé de déplacement au montage du frein ; ainsi, comme on le verra plus loin, il est possible de monter beaucoup plus commodément que par le passé le frein à main sur un véhicule automobile, en accrochant le câble sur la zone d'ancrage du levier exclusivement par une intervention depuis le dessous du véhicule, à l'extérieur de celui-ci, c'est-à-dire sans avoir à intervenir de l'intérieur du véhicule sous le levier de commande manuelle.

La compensation automatique d'un éventuel allongement du câble de freinage peut en outre s'effectuer grâce à des moyens simples et peu coûteux de réalisation, et fiables à l'utilisation, notamment dans un mode de mise en oeuvre préféré de l'invention selon lequel les moyens de déplacement automatique de la première extrémité de la gaine, par rapport au support, assurent ledit déplacement par pas, chaque fois que l'allongement du câble de freinage par rapport à la gaine atteint une amplitude de valeur déterminée.

Par exemple, les moyens de raccordement comportent :
- un fourreau immobilisé par rapport au support dans ledit sens déterminé de déplacement, et présentant un axe orienté dans ledit sens,
- un fourreau mobile au coulissement dans ledit sens déterminé de déplacement à l'intérieur du fourreau immobilisé et coaxial à celui-ci, ledit fourreau mobile recevant intérieurement la première extrémité de la gaine en lui offrant un appui solidaire au moins dans ledit sens déterminé de déplacement,
- un ressort de sollicitation élastique du fourreau mobile en sens inverse dudit sens déterminé de déplacement par rapport au fourreau mobile, à l'intérieur de celui-ci,
lesdits fourreaux et ledit ressort autorisant un libre passage du câble de freinage, et :
- le fourreau mobile présente au moins un jeu de dents qui sont juxtaposées dans ledit sens déterminé de déplacement et dont chacune présente vers l'avant, en référence à ce sens, une face perpendiculaire à l'axe des fourreaux et vers l'arrière, en référence à ce sens, une face oblique par rapport à l'axe des fourreaux et s'éloignant de celui-ci vers l'avant, en référence à ce sens,
- au moins un organe d'encliquetage porté par le fourreau immobilisé, de façon fixe suivant le sens déterminé de déplacement et en sens inverse de ce sens et de façon mobile perpendiculairement à l'axe, ledit organe d'encliquetage formant une saillie vers les dents du fourreau mobile à l'intérieur du fourreau immobilisé,
- des moyens de sollicitation élastique de l'organe d'encliquetage vers l'axe des fourreaux, de telle sorte que s'établisse une relation d'encliquetage unidirectionnel entre les deux fourreaux par l'intermédiaire de l'organe d'encliquetage et des dents.

En vue d'un montage depuis l'extérieur du véhicule, par le dessous de celui-ci, la liaison entre le support et le fourreau immobilisé résulte de préférence du fait que le support et le fourreau immobilisé présentent des moyens complémentaires d'appui du fourreau immobilisé dans ledit sens déterminé de déplacement contre le support, laissant le fourreau immobilisé libre par rapport au support en sens inverse de ce sens; de préférence, les moyens complémentaires d'appui constituent également des moyens de guidage au pivotement relatif autour d'un axe horizontal, si bien que la gaine et le câble de freinage peuvent s'orienter librement dans le sens de la hauteur notamment lors de l'actionnement du frein à main.

En vue de faciliter à la fois le montage sur le support et l'ancrage de la tête du câble de freinage sur la zone d'ancrage de celui-ci, le dispositif selon l'invention comporte de préférence des moyens d'immobilisation relative forcée du fourreau immobilisé et du fourreau mobile, dans ledit sens déterminé de déplacement et en sens inverse de ce sens, dans une position relative de montage telle que lesdites dents soient toutes placées en avant de l'organe d'encliquetage en référence audit sens déterminé de déplacement ; par exemple, ces moyens d'immobilisation relative forcée comportent une goupille sécable de liaison entre les fourreaux en position de montage ; de ce fait, lors du montage du dispositif selon l'invention sur un véhicule, alors que le levier de commande de freinage a déjà été monté sur celui-ci, on peut introduire simultanément dans le support, depuis l'extérieur du véhicule, d'une part la gaine jusqu'à ce qu'elle vienne en butée à l'intérieur du fourreau et d'autre part le câble de freinage jusqu'à ce qu'il vienne s'accrocher automatiquement sur la zone d'ancrage du levier, alors que le câble forme une saillie déterminée, par sa première extrémité, hors de la gaine par la première extrémité de celle-ci puis, en cassant la goupille de liaison, mettre le frein en service en autorisant un recul du fourreau mobile par rapport au fourreau immobilisé, avec encliquetage mutuel de ces deux fourreaux, jusqu'à ce que le câble soit tendu.

Naturellement, on peut être amené à démonter le dispositif de commande de frein à main, en vue d'intervenir en cours de vie du véhicule ; il convient à cet effet de pouvoir ramener les deux fourreaux dans une position relative proche de leur position relative de montage, mouvement auquel s'oppose l'organe d'encliquetage ; de ce fait, on prévoit de préférence que le dispositif selon l'invention comporte des moyens pour écarter à volonté l'organe d'encliquetage de l'axe des fourreaux de façon à supprimer à volonté ladite relation d'encliquetage unidirectionnel, et des moyens d'immobilisation relative volontaire du fourreau immobilisé et du fourreau mobile dans ledit sens déterminé de déplacement et en sens inverse de ce sens dans une position relative d'intervention telle que lesdites dents soient toutes ou pratiquement toutes placées en avant de l'organe d'encliquetage en référence audit sens déterminé de déplacement ; selon un mode de mise en oeuvre préféré, à cet effet, le fourreau immobilisé et le fourreau mobile présentent des périphéries respectivement intérieure et extérieure cylindriques de révolution autour de l'axe des fourreaux, de façon à assurer un guidage mutuel à la fois au coulissement relatif suivant l'axe des fourreaux et à la rotation relative autour de cet axe, le fourreau mobile présente une zone de commande de rotation autour de l'axe des fourreaux par rapport au fourreau immobilisé, ladite zone de commande de rotation étant accessible par l'arrière, en référence audit sens déterminé de déplacement, les dents sont localisées dans un premier dièdre d'angle limité, en référence à cet axe, sur la périphérie extérieure du fourreau mobile, et la périphérie extérieure du fourreau mobile présente, dans un deuxième dièdre d'angle limité, en référence à l'axe des fourreaux, et différent du premier dièdre, au moins une encoche de réception dudit organe d'encliquetage dans une relation d'immobilisation du fourreau mobile par rapport au fourreau immobilisé dans ledit sens déterminé de déplacement et en sens inverse de ce sens ; de préférence, pour répartir au moins les efforts résultant de l'encliquetage entre les deux fourreaux, on établit une symétrie dans le dispositif selon l'invention en prévoyant que le fourreau mobile porte un deuxième jeu desdites dents, symétriques dudit jeu par rapport à l'axe des fourreaux, que le fourreau immobilisé porte un deuxième organe d'encliquetage, symétrique dudit organe d'encliquetage par rapport à l'axe des fourreaux et muni de moyens de sollicitation élastique vers cet axe, que les moyens de sollicitation élastique desdits organes d'encliquetage soient constitués par un étrier élastique commun présentant deux branches sensiblement parallèles à l'axe des fourreaux, longeant extérieurement le fourreau immobilisé, raccordées mutuellement par une âme transversale par rapport à l'axe des fourreaux, placée en avant de ces derniers en référence audit sens déterminé de déplacement, et présentant des moyens autorisant un libre passage du câble, et que les organes d'encliquetage soient constitués par des extrémités libres desdites branches, recourbées vers l'axe et traversant le fourreau immobilisé par des lumières localisées de ce dernier ; on prévoit également de préférence que la périphérie extérieure du fourreau mobile présente une deuxième encoche de réception du deuxième organe d'encliquetage, symétrique de ladite encoche par rapport à l'axe des fourreaux.

D'autres caractéristiques et avantages d'un dispositif de commande de frein à main selon l'invention ressortiront de la description ci-dessous, relative à un mode de réalisation non limitatif, ainsi que des dessins annexés qui font partie intégrante de cette description.

- La figure 1 montre une partie d'un frein à main comportant un dispositif de commande conforme à la présente invention, pour l'essentiel en coupe par un plan vertical, longitudinal de symétrie incluant l'axe commun des fourreaux et par ailleurs perpendiculaire à l'axe horizontal de pivotement du levier de commande manuelle du frein par rapport au support, lui-même fixe par rapport à un véhicule automobile équipé du frein.

- La figure 2 montre une vue de ce frein à main en coupe par des plans transversaux, verticaux, représentés en II-II à la figure 1.

- La figure 3 montre une vue en coupe par un plan vertical, transversal, repéré en III-III à la figure 1,

- La figure 4 montre, à échelle agrandie mais en une vue par ailleurs analogue à celle de la figure 1, le détail des moyens assurant la compensation automatique de l'allongement éventuel du câble de freinage par rapport à sa gaine.

- La figure 5 montre une vue de ces mêmes moyens en coupe par un plan transversal repéré en V-V à la figure 4, et approximativement horizontal.

- La figure 6 montre, en une vue de dessous dans un sens repéré par une flèche VI à la figure 4, le fourreau mobile formant partie des moyens de compensation de l'allongement du câble de freinage par rapport à la gaine.

- Les figures 7 à 10 montrent des vues de ce fourreau en coupe par des plans transversaux, approximativement verticaux, repérés respectivement en VII-VII, VIII-VIII, IX-IX, X-X à la figure 6.

- Les figures 11 à 16 montrent, sur des détails agrandis de la partie supérieure de la figure 5, différentes positions du fourreau mobile par rapport au fourreau immobilisé, au cours du montage et de l'utilisation du dispositif de compensation de l'allongement du câble de freinage par rapport à sa gaine.

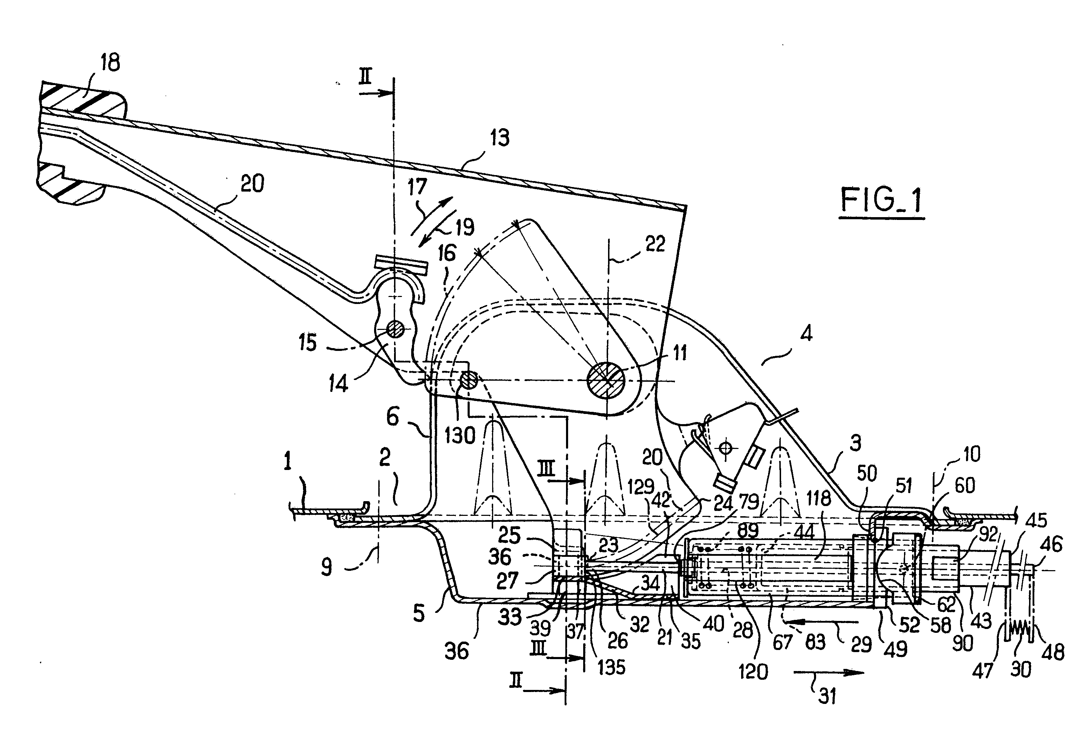

On se référera en premier lieu aux figures 1 à 3, où l'on a désigné par 1 une zone de plancher, supposée horizontale, d'un véhicule non représenté et par 2 une ouverture aménagée dans cette zone de plancher 1 ; dans cette ouverture 2 est inséré par le bas, et solidarisé avec la zone de plancher 1 autour de l'ouverture 2, un support rigide 3 d'un dispositif 4 de commande de frein à main conforme à la présente invention.

Le support 3 comporte dans cet exemple un boîtier inférieur 5, disposé sous la zone de plancher 1, et un capot supérieur 6 quant à lui placé pour l'essentiel au-dessus de la zone de plancher 1, et solidarisé avec le boîtier inférieur 5 par tout moyen et par exemple par vissage dans des zones proches de la périphérie de l'ouverture 2, comme on l'a schématisé par des traits mixtes 9 et 10.

A un niveau supérieur à celui de la zone de plancher 1, le support rigide 3 porte un levier 13 de commande manuelle de freinage, d'un type connu en soi, monté au pivotement sur le capot supérieur 6 autour d'un axe 11 horizontal, transversal, c'est-à-dire perpendiculaire à un plan vertical 12 formant plan longitudinal médian de symétrie pour l'ensemble du dispositif 4 de commande de frein à main et pour le support 3 de celui-ci ; de façon connue en soi, le levier 13 porte, de façon pivotante autour d'un axe 15 parallèle à l'axe 11, un cliquet 14 susceptible de coopérer avec une denture 16 portée de façon solidaire par le capot supérieur 6 du support 3, de façon centrée sur l'axe 11 ; le cliquet 14 et la denture 16 présentent des formes respectives telles que le cliquet 14 franchisse librement la denture 16 lorsque le levier 13 tourne autour de l'axe 11, par rapport au capot 6, dans un sens 17 correspondant à un mouvement de levée d'une poignée 18 du levier 13, c'est-à-dire au passage d'une position de non-freinage illustrée à la figure 1 à une position de freinage non illustrée, alors que le cliquet 14 s'oppose à une rotation du levier 13 par rapport au capot 6 dans le sens opposé 19, une tringlerie de commande 20 actionnée depuis la poignée 18 permettant toutefois, à volonté, de dégager le cliquet 14 de la denture 16 en position de freinage pour autoriser le passage du levier 13, par pivotement dans le sens 19, à la position de non-freinage ; cette position est définie par appui du levier 13, dans le sens 19, contre une butée fixe 130 du capot supérieur 6 du support 3 ; ces dispositions sont connues en elles-mêmes d'un Homme du métier, et ne seront de ce fait pas décrites davantage.

Pour des raisons de simplicité, on supposera pour la suite de la description que le levier 13 occupe sa position de non-freinage, illustrée notamment à la figure 1, et c'est en particulier dans cette position que le levier 13 sera décrit à présent.

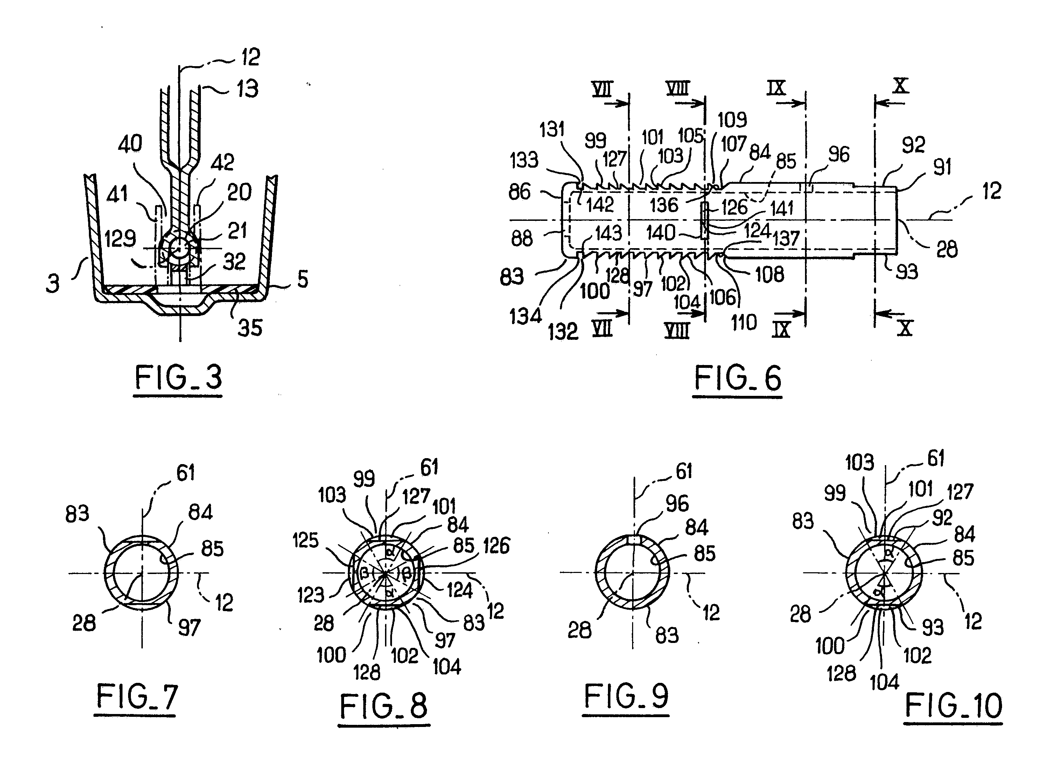

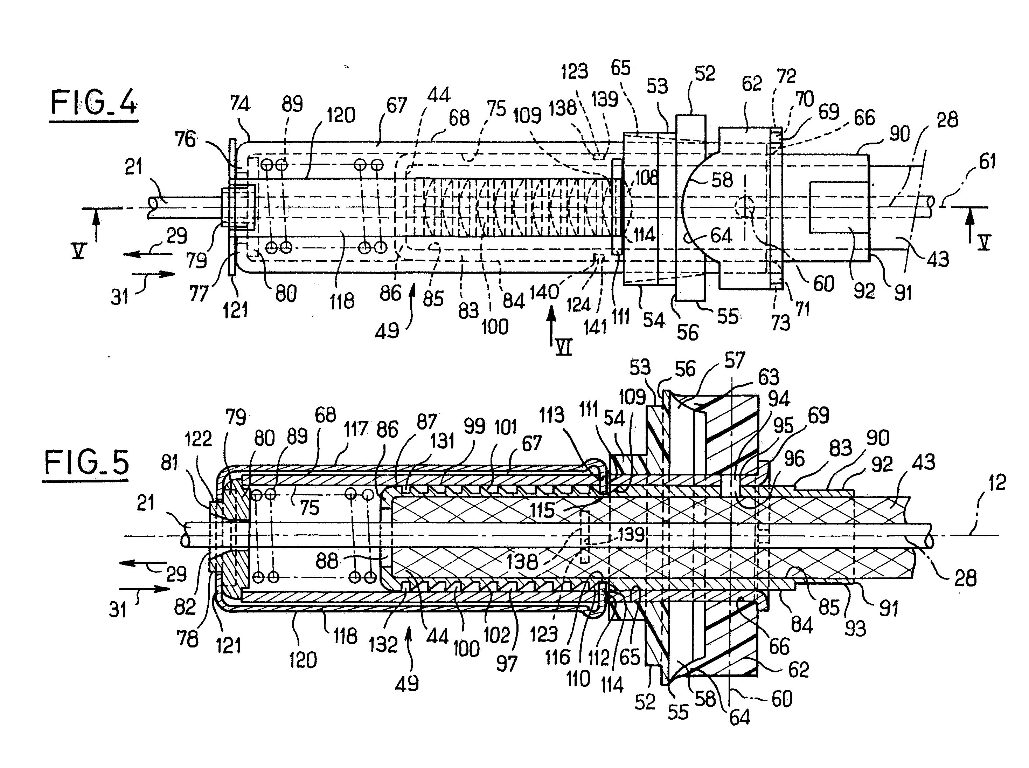

En dessous de l'axe 11 notamment dans cette position, et plus précisément pour l'essentiel à l'intérieur du boîtier inférieur 5, le levier 13 présente de façon solidaire un canal 20 disposé suivant le plan 12, symétriquement par rapport à celui-ci, et ouvert dans le sens d'un éloignement radial par rapport à l'axe 11 ; dans un quelconque plan de coupe incluant cet axe 11, comme le montre par exemple la figure 3, ce canal 20 présente une section telle qu'il puisse recevoir un câble de freinage 21 abordant le canal 20 tangentiellement, par l'arrière en référence au sens 17, sous forme d'un enroulement autour de l'axe 11 ; selon le mode de réalisation préféré illustré, les zones du canal 20 se succédant dans le sens 19, d'une extrémité avant 23, en référence au sens 17, située immédiatement en avant d'un plan vertical 22 incluant l'axe 11 à une extrémité arrière 24 située en arrière de ce plan 22 en référence au sens 17, sont de plus en plus proches de l'axe 11 de telle sorte que le pivotement du levier 13 dans le sens 17 autour de l'axe 11, d'angles successifs identiques se traduise par l'enroulement dans le canal 20 de longueurs successives de plus en plus faibles du câble de freinage 21.

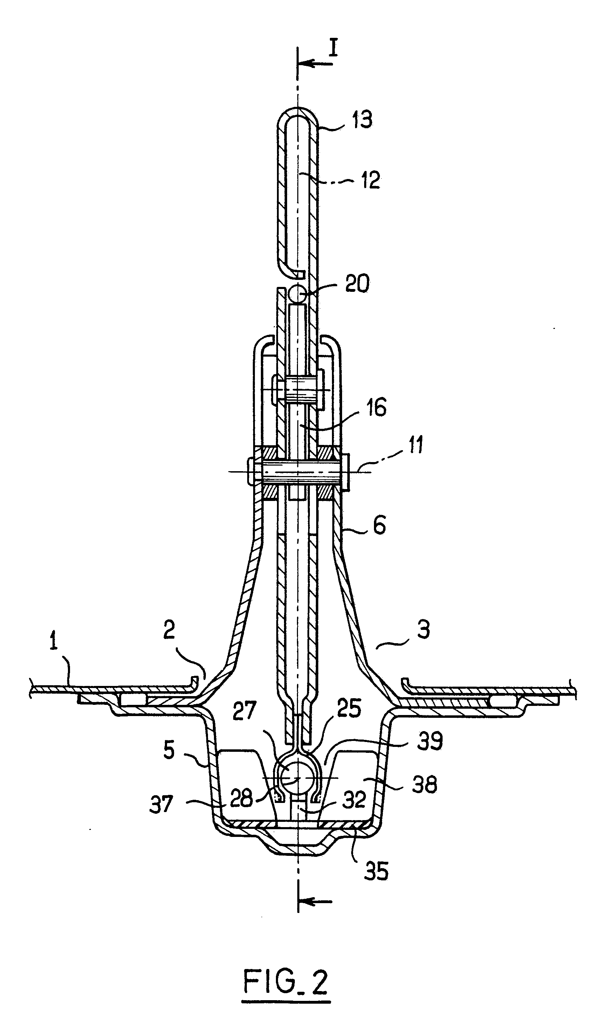

A son extrémité avant 23, le canal 20 se raccorde à une encoche 25 qui est ouverte vers l'avant, en référence au sens 17, ainsi que dans le sens d'un éloignement radial par rapport à l'axe 11 et présente dans un plan incluant cet axe 11 ou dans un plan vertical et transversal si l'on se réfère à la figure 1, comme il est illustré à la figure 2, une section élargie par rapport à celle du canal 20.

Cette encoche 25 constitue pour le câble de freinage 21 une zone d'ancrage sur le levier 13 et, à cet effet, le câble de freinage 21 porte de façon solidaire, par une extrémité 26 destinée à son ancrage sur le levier 13, une tête élargie 27 définissant autour du câble 21, vers l'arrière en référence au sens 17, un épaulement annulaire 135 tel que, par emboîtement de la tête 27 dans l'encoche 25, cet épaulement 135 prenne appui vers l'arrière, en référence au sens 17, sur le levier 13 et que, ainsi, le pivotement de celui-ci dans le sens 17 applique au câble de freinage 21, supposé rectiligne et d'axe 28 situé approximativement horizontalement dans le plan 12, tangentiellement à une ligne moyenne 129 du canal 20 au niveau de l'extrémité 23 de celui-ci dans la position illustrée, une traction dans un sens 29 de cet axe 28 ; ce sens 29, comme l'axe 28, est amené à prendre une obliquité variable par rapport à l'horizontale dans la mesure où l'axe 28 reste tangent à la ligne moyenne 129, non circulaire, du canal 20 quelle que soit la position du levier 13, autour de l'axe 11, par rapport au capot 6 du support 3 ; l'emboîtement de la tête 27 dans l'encoche 25 est maintenu d'une part du fait que des moyens élastiques 30, incorporés au frein commandé par le dispositif 4 et agissant sur l'extrémité 46 du câble 21 opposée à son extrémité 26 comme il apparaîtra plus loin, de façon connue en soi et simplement schématisée à la figure 1, appliquent au câble de freinage 21 une traction élastique dans le sens 31 opposé au sens 29 ; il résulte d'autre part du fait que, dans la position du levier 13 et de l'encoche 25 illustrée à la figure 1, alors que l'encoche 25 est ouverte vers le bas, une languette élastique 32 applique à la tête 27 un effort dirigé vers l'axe 11 pour la retenir dans l'encoche 25 ; pour des raisons qui apparaitront plus loin, la languette 32, disposée symétriquement par rapport au plan 12, coopère ainsi avec la tête 27, dans la position du levier 13 illustrée, par une zone antérieure 33, située légèrement en avant du plan 22 en référence au sens 29, et présente en arrière de cette zone antérieure 33, si l'on se réfère au sens 29, une obliquité vers le bas de façon à se raccorder en arrière du plan 22, par une zone d'extrémité postérieure 34, à une plaquette horizontale 35 appliquée, de façon solidaire, sur un fond plat, également horizontal 36 du boîtier 5 ; la plaquette 35 porte également de façon solidaire, dans des positions respectives symétriques l'une de l'autre par rapport au plan 12, respectivement de part et d'autre de l'encoche 25 et de la tête 27 dans la position du levier 13 illustrée, des ailettes verticales ou approximativement verticales telles que 36, 37, 38 définissant entre elles, suivant le plan 12, une goulotte approximativement horizontale 39 de guidage de la tête 27 dans le sens 29 et dans le sens opposé 31 lors du montage du dispositif 4 de commande de frein à main, comme il apparaîtra plus loin : vers l'arrière en référence au sens 29, cette goulotte 39 est prolongée par une goulotte approximativement horizontale 40 également destinée à un tel guidage de la tête 27 du câble 21 au montage ; cette goulotte 40 est par exemple définie comme la goulotte 39 par la plaquette 35 elle-même, portant à cet effet vers le haut deux saillies 41, 42 plates, verticales, mutuellement parallèles, symétriques l'une de l'autre par rapport au plan 12 pour définir entre elles la goulotte 40 ; les deux goulottes 39 et 40 sont naturellement ouvertes vers le haut et elles présentent dans le sens d'un éloignement radial par rapport à l'axe 11, abstraction faite de la languette 32, des dimensions propres à permettre le passage de la tête 27 du câble 21 entre la plaquette 35 d'une part, le canal 20 et l'encoche 25 d'autre part ; dans la mesure où la goulotte 40 est toujours placée en arrière de l'encoche 25, en référence au sens 29, quelle que soit la position du levier 13, elle peut présenter transversalement par rapport au plan 12 des dimensions aussi proches que possible de celles de la tête 27 afin de guider celle-ci au mieux, lorsqu'elle n'est pas encore emboîtée dans l'encoche 25, lors du montage du dispositif selon l'invention, comme il apparaîtra plus loin.

De façon connue en soi, le câble de freinage 21 est monté coulissant dans une gaine 43 par une première extrémité 44 de laquelle il sort par son extrémité 23 portant la tête 27 ; la gaine 43 présente une deuxième extrémité 45 par laquelle le câble 21 sort par sa deuxième extrémité 46 ; de façon connue en soi, les extrémités respectives 45 et 46 de la gaine 43 et du câble de freinage 21 sont reliées de façon solidaire à des organes de freinage respectifs 47, 48, généralement situés au niveau des roues arrière du véhicule, lesquels organes de freinage 47 et 48 sont sollicités par les moyens élastiques 30 déjà cités, dits "de défreinage", dans un sens tel que le câble 21 tende à sortir davantage par son extrémité 46 de l'extrémité 45 de la gaine 43.

En principe, le câble 21 est inextensible et la gaine 43 incompressible, si bien qu'il suffit théoriquement de raccorder l'extrémité 44 de la gaine 43 de façon solidaire au support 3 pour qu'un pivotement donné du levier 13 dans le sens 17 autour de l'axe 11, à partir de la position de non-freinage, aboutisse toujours au même positionnement relatif des organes de freinage 47 et 48, correspondant au freinage, et pour que le pivotement du levier 13 en retour vers la position de non-freinage ramène les organes de freinage 47 et 48, sous l'action des moyens de défreinage 30, à leur position initiale.

Un tel montage est d'ailleurs adopté généralement sur les dispositifs connus ; toutefois, généralement par allongement du câble de freinage 21 et parfois par raccourcissement de la gaine 23 au cours du temps, il est nécessaire de déplacer de plus en plus le levier 13 dans le sens 17 à partir de la position de non-freinage pour ramener les organes de freinage 47, 48 dans une position relative de freinage et l'on remédie habituellement à cet inconvénient en raccourcissant la longueur utile du câble de freinage entre son point d'ancrage sur l'organe de freinage associé et sont point d'ancrage sur le levier de commande manuelle de freinage ; suivant les cas, on intervient à cet effet manuellement ou automatiquement, grâce à des moyens incorporés au levier de commande manuelle de freinage comme c'est par exemple le cas dans le dispositif décrit par le document commenté en préambule.

La présente invention résulte d'une démarche totalement différente puisque la tête 27 du câble de freinage 21 reste à demeure dans l'encoche 25, après un montage initial, dans une position restant inchangée par rapport au levier 13, alors que l'on agit par contre au niveau de l'extrémité 44 de la gaine 43 par laquelle cette gaine 43 se raccorde au support 3.

A cet effet, l'extrémité 44 de la gaine 43 est raccordée au support 3, et plus précisément au boîtier 5 de celui-ci, en arrière de l'encoche 25 supposée dans la position illustrée à la figure 1, si l'on se réfère au sens 29, par l'intermédiaire de moyens de raccordement 49 qui vont être décrits à présent, plus particulièrement en référence à la figure 1 et aux figures 4 à 7.

Comme le montre la figure 1, en vue de la réception de ces moyens de raccordement 49, le boîtier inférieur 5 du support 3 est délimité en arrière de la goulotte 40 si l'on se réfère au sens 29, à distance de cette goulotte 40, par une paroi transversale plate 50 approximativement verticale, percée, suivant un axe non référencé situé dans le plan 12 et coïncidant avec l'axe 28 dans la position illustrée, d'un trou 51 symétrique par rapport au plan 12 et présentant de préférence une forme différente d'une forme de révolution autour de son axe, pour des raisons de détrompage qui apparaîtront plus loin.

On remarquera que le trou 51 est situé en dessous de la zone de plancher 1 du véhicule, à l'extérieur de celui-ci.

Dans le trou 51 est emmanchée dans le sens 29, c'est-à-dire depuis l'extérieur du support 3, une bague de butée fixe 52 transversant la paroi 50 de part en part suivant l'axe 28 et présentant, à l'intérieur du trou 51, un tronçon 53 dont la forme est étroitement complémentaire de celle du trou 51, c'est-à-dire de préférence différente d'une forme de révolution autour de l'axe 28, de telle sorte que la bague de butée fixe 52 ne puisse pas tourner autour de cet axe dans le trou 51 ; respectivement de part et d'autre de ce tronçon 53, la bague de butée fixe 52 présente des tronçons 54, 55 dont le premier, situé en avant du tronçon 53 si l'on se réfère au sens 29, est ainsi logé à l'intérieur du boîtier 5 et présente perpendiculairement à l'axe 28 des dimensions compatibles avec la traversée du trou 51 et dont le second, placé en arrière du tronçon 53 en référence au sens 29, constitue un élargissement par rapport au tronçon 53 dans le sens d'un éloignement radial par rapport à l'axe 28 de façon à constituer, à sa liaison avec le tronçon 53, un épaulement plat 56, perpendiculaire à l'axe 28, et prenant appui dans le sens 29 contre la paroi 50 pour immobiliser la bague de butée fixe 52 dans ce sens par rapport à cette paroi ; éventuellement, des moyens complémentaires de solidarisation de la bague de butée fixe 52 avec la paroi 50 peuvent être prévus, mais, en raison notamment de l'action des moyens élastiques 30 sur la gaine 43 et le câble de freinage 21, un simple appui mutuel par l'intermédiaire de l'épaulement 56 est suffisant comme il apparaîtra plus loin.

Vers l'arrière en référence au sens 29, la bague de butée fixe 52 présente, respectivement de part et d'autre de l'axe 28, dans des positions symétriques l'une de l'autre par rapport au plan 12, deux portées concaves 57, 58, cylindriques de révolution autour d'un même axe horizontal 60 avec des développements angulaires respectifs identiques, inférieurs à 180°, répartis uniformément respectivement de part et d'autre d'un plan 61 perpendiculaire au plan 12 et incluant l'axe 28 ; par ces portées 57 et 58, la bague de butée fixe 52 sert d'appui vers l'avant, en référence au sens 29, et de moyen de guidage au pivotement relatif autour de l'axe 60 à une bague de butée mobile 62 présentant à cet effet, en regard de chacune des portées concaves 57, 58, des portées convexes 63, 64 symétriques l'une de l'autre par rapport au plan 12, de révolution autour de l'axe 60 et par exemple circulaires à leur contact avec les portées 57 et 58, de même diamètre que ces dernières mais avec un développement angulaire supérieur à celui de ces dernières de telle sorte que, en appui dans le sens 29 contre les portées 57 et 58 de la bague de butée fixe 52 par ces portées 63 et 64, la bague de butée mobile 62 puisse pivoter autour de l'axe 60 par rapport à la bague de butée fixe 52, de quelque degrés d'angle respectivement de part et d'autre d'une position relative correspondant à une coaxialité, suivant l'axe 28 ; cette position de coaxialité est la seule position illustrée aux figures et, pour des raisons de commodité, les bagues 52 et 62 seront décrites par la suite en référence à cette position.

Les deux bagues de butée 52 et 62 sont percées de part en part, suivant l'axe 28, d'alésages respectifs 65, 66 ; l'alésage 66 présente une forme cylindrique de révolution autour de l'axe 28 de façon à permettre l'emboîtement sans jeu, à l'intérieur de la bague de butée 62, d'un fourreau 67 présentant à cet effet, dans le sens d'un éloignement par rapport à l'axe 28, une face périphérique extérieure 68 cylindrique de révolution autour de l'axe 28 avec un diamètre sensiblement identique à celui de l'alésage 66; par contre, l'alésage 65 de la bague de butée fixe 52 présente une forme s'évasant vers le haut et vers le bas dans le sens 29, avec une dimension verticale minimale supérieure au diamètre de la face périphérique extérieure 68 du fourreau 27 de façon à autoriser le pivotement précité de la bague de butée mobile 62 par rapport à la bague de butée fixe 52, en dépit de la présence du fourreau 67 qui traverse également la bague de butée fixe 52 de part en part via l'alésage 65 de celle-ci ; parallèlement à l'axe 60, l'alésage 65 peut présenter des dimensions sensiblement égales, ou encore supérieures, au diamètre de la face 68 du fourreau 67.

Immédiatement en arrière de la bague de butée mobile 62 si l'on se réfère au sens 29, le fourreau 67 présente en saillie sur sa face 68, dans le sens d'un éloignement par rapport à l'axe 28, une collerette 69 annulaire de révolution autour de cet axe 28 ; par cette collerette 69, le fourreau 67 prend appui vers l'avant, en référence au sens 29, contre la bague 62 autour de l'alésage 66 de celle-ci; de préférence, la collerette 69 présente au moins une encoche, et par exemple deux encoches 70, 71 diamétralement opposées par rapport à l'axe 28 et dans lesquelles s'engagent des saillies respectives 72, 73 de la bague de butée mobile 62, de telle sorte que l'appui du fourreau 67 dans le sens 29 sur la bague de butée mobile 62 s'accompagne d'une immobilisation à la rotation relative autour de l'axe 28.

De la collerette 69 jusqu'à une zone d'extrémité antérieure 74, en référence au sens 29, le fourreau 67 est délimité d'une part dans le sens d'un éloignement radial par rapport à l'axe 28 par la face périphérique extérieure 68 précitée et d'autre part, vers l'axe 28, par une face périphérique intérieure 75 également cylindrique de révolution autour de l'axe 28 ; au niveau de l'extrémité avant 74, le fourreau 67 présente en saillie vers l'axe 28, perpendiculairement à celui-ci, par rapport à sa face périphérique intérieure 75 des rebords localisés 76, 77 qui laissent subsister entre eux, suivant l'axe 28, un passage 78 par lequel est emboîté dans le sens 29, c'est-à-dire depuis l'intérieur du fourreau 67, un guide-câble 79 que le câble de freinage 21 traverse librement, de part en part, suivant l'axe 28 et qui assure le maintien d'une coaxialité, suivant cet axe, entre le câble 21 et le fourreau 67 ; à cet effet, le guide-câble 79 s'appuie contre les rebords 76 et 77 du fourreau 67, dans le sens 29, par une collerette périphérique 80, annulaire, de révolution autour de l'axe 28 et présente suivant cet axe une zone en forme de manchon 81, traversant de part en part le passage 78 suivant l'axe 28 et elle-même percée de part en part suivant cet axe d'un alésage 82 de guidage coaxial du câble 21.

Ainsi, compte tenu de la possibilité pour la bague de butée mobile 62 de pivoter autour de l'axe 60 par rapport à la bague de butée fixe 52, le câble 21 dont l'axe 28 s'oriente différemment, dans le plan 12, en fonction de la position du levier 13, peut conserver une rectilinéarité entre le fourreau 67 et son extrémité 23 d'ancrage dans l'encoche 25 par la tête 27, sans cassure au franchissement du passage 78, en amenant le fourreau 67 dans une orientation correspondante par rapporte à la bague de butée fixe 52 et au boîtier inférieur 5 du support 3 ; de préférence, à cet effet, l'alésage 82 du guide-câble 79 présente intérieurement un diamètre minimal aussi proche que possible du diamètre du câble 21.

A l'intérieur du fourreau 67, dont on comprendra ultérieurement qu'il est par contre immobilisé dans le sens 29 par rapport au boîtier 5 du fait de son seul appui dans la collerette 69 sur la bague du butée mobile 62 elle-même en appui sur la bague de butée fixe 52 quant à elle en appui sur la paroi 50, et du fait de l'action des moyens élastiques 30 entre les organes de freinage 47 et 48, est monté avec possibilité de coulissement relatif suivant l'axe 28 un deuxième fourreau ou fourreau mobile 83 plus particulièrement visible aux figures 4 à 10.

Ce fourreau mobile 83 est délimité, dans le sens d'un éloignement par rapport à l'axe 28, par une face 84 cylindrique de révolution autour de cet axe 28 avec un diamètre sensiblement identique à celui de la face périphérique intérieure 75 du fourreau 67, de façon à assurer d'une part un guidage au coulissement relatif suivant l'axe 28 et d'autre part un guidage à la rotation relative autour de cet axe.

Vers cet axe 28, le fourreau mobile 83 est délimité par une face périphérique intérieure 85 également cylindrique de révolution autour de l'axe 28, avec un diamètre supérieur à celui du câble 21, et en pratique aussi voisin que possible du diamètre de la périphérie extérieure de la gaine 43, sensiblement cylindrique de révolution autour de l'axe 28 ; de ce fait, la gaine 43 peut s'emboîter à l'intérieur du fourreau mobile 83, depuis l'arrière en référence au sens 29, jusqu'à venir en appui vers l'avant, en référence à ce sens 29, par son extrémité 44, sur une collerette annulaire, plate 86 que le fourreau mobile 83 présente transversalement à l'axe 28, en saillie vers celui-ci par rapport à sa face périphérique intérieure 85, dans une zone d'extrémité avant 87, en référence au sens 29, située à l'intérieur du fourreau 67, en regard de la collerette 80 du guide-câble 79 ; suivant l'axe 28, la collerette 86 délimite par contre un alésage 88 autorisant un libre passage du câble 28 à sa sortie hors de la gaine 43 par l'extrémité 44 de celle-ci.

Entre la collerette 86 du fourreau mobile 83 et la collerette 80 du guide-câble 81 est interposé un ressort hélicoïdal 89 ainsi disposé autour du câble 21 et maintenu en précontrainte de compression si bien que, notamment, il retient le guide-câble 79 en position contre les rebords 76, 77 de l'extrémité antérieure 74 du fourreau 67.

Des moyens, qui vont être décrits à présent, sont prévus pour s'opposer à une expulsion du fourreau mobile 83 hors du fourreau 67 sous l'action du ressort hélicoïdal 89 mais on remarquera que, dans l'une quelconque des positions relatives des deux fourreaux autorisées par ces moyens d'immobilisation, le fourreau mobile 83 présente en saillie hors du fourreau immobilisé 67, vers l'arrière en référence au sens 29, un tronçon d'extrémité postérieure 90 délimité par les faces 84 et 85 ainsi que, vers l'arrière en référence au sens 29, par une face annulaire 91 transversale par rapport à l'axe 28, autour de la gaine 43, et que la face périphérique extérieure 84 du fourreau mobile 83 présente au niveau de ce tronçon 80, à proximité immédiate de la face 91, deux méplats 92 et 93, mutuellement parallèles, perpendiculaires au plan 61, offrant une prise à un outil permettant de faire tourner à volonté le fourreau mobile 83 à l'intérieur du fourreau immobilisé 67, autour de l'axe 28, dans des conditions qui seront décrites plus loin.

La position relative des fourreaux 83 et 67 qui est illustrée aux figures 1 à 5 correspond à une position de montage sur un véhicule, dans laquelle les deux fourreaux 83 et 67 sont immobilisés l'un par rapport à l'autre par engagement d'une goupille sécable 94 dans un alésage 95 aménagé suivant un axe radial par rapport à l'axe 28, et par exemple suivant l'axe 60, dans le fourreau 67 et dans un alésage 96 aménagé dans le fourreau 83, également suivant un axe radial en référence à l'axe 28 ; dans cette position de montage, le fourreau 83 est engagé au maximum à l'intérieur du fourreau 67, si bien que le ressort 89 est comprimé au maximum ; bien que la goupille 94 soit destinée à être rompue au montage sur un véhicule, on continuera de décrire les deux fourreaux 83 et 67 dans la position relative qu'ils occupent lorsqu'ils sont solidarisés mutuellement par cette goupille 94.

On remarque que dans cette position de montage, le fourreau 83 présente, à l'intérieur du fourreau 67, une zone 97 située en avant du niveau du tronçon 54 de la bague de butée fixe 52, en référence au sens 29, à l'intérieur du boîtier inférieur 5 du support 3.

Dans cette zone, située en avant de l'alésage 96 de réception de la goupille 94, la face périphérique extérieure 84 par ailleurs cylindrique du fourreau mobile 83 présente deux jeux 99, 100, symétriques l'un de l'autre par rapport au plan 12, de dents 101, 102 qui sont juxtaposées mutuellement dans le sens 29 et dont chacune présente vers l'avant, en référence à ce sens, une face plane 103, 104 perpendiculaire à l'axe 28 alors qu'elle présente vers l'arrière, en référence au sens 29, une face également plane 105, 106, quant à elle oblique par rapport à l'axe 28 et s'éloignant de celui-ci vers l'avant en référence au sens 29, en restant toutefois perpendiculaire au plan 61 ; ces dents 101, 102 sont toutes identiques, et se correspondent de l'un à l'autre des jeux 99 et 100 par symétrie mutuelle en référence à l'axe 28 ; on remarquera, en se référant par exemple aux figures 7 et 8, que chacun des jeux de dents 99 et 100 est localisé dans un dièdre d'angle α inférieur à 90°, en référence à l'axe 28.

On remarquera que, dans la position de montage, les dents 101 et 102 situées à l'extrémité arrière des deux jeux 99 et 100, en référence au sens 29, sont disposées légèrement en avant, si l'on se réfère au sens 29, de la limite antérieure, en référence à ce sens, du tronçon 54 de la bague de butée fixe 52 ; la face oblique, telle que 105, 106, de ces dents extrêmes se raccorde vers l'arrière, par l'intermédiaire d'une face plane respective 136, 137 parallèle à l'axe 28 et perpendiculaire au plan 61, à une face plane respective 107, 108 également plane et perpendiculaire au plan 61, mais oblique par rapport à l'axe 28 et s'éloignant quant à elle vers l'arrière de cet axe 28, en référence au sens 29 ; les faces obliques 107 et 108, les faces planes 136, 137 précitées, et les faces obliques respectives telles que 105, 106 des dents 103, 104 respectivement directement adjacentes définissent dans la face périphérique extérieure 84 du fourreau 83 deux encoches 109, 110 en regard de chacune desquelles, suivant une direction radiale en référence à l'axe 28, le fourreau immobilisé 27 présente une lumière respective 111, 112 rectiligne, perpendiculaire au plan 61 et symétrique par rapport à ce dernier ; les deux lumières 111 et 112 sont symétriques l'une de l'autre par rapport au plan 12 et reçoivent au libre coulissement perpendiculairement au plan 28, pratiquement sans jeu parallèlement à cet axe ou perpendiculairement au plan 61, un organe d'encliquetage respectif 113, 114 de forme plate, perpendiculaire à l'axe 28, pénétrant ainsi de l'extérieur du fourreau 67 vers l'axe 28 jusqu'à s'engager dans l'encoche respectivement associée 109, 110 ; vers l'axe 28, chacun des organes d'encliquetage 113, 114 est délimité par un bord plat, allongé perpendiculairement au plan 61, respectivement 115, 116, par lequel il s'appuie à plat sur le fond de l'encoche respectivement associée 109, 110, lequel est défini par la face respective 136, 137, elle-même plane et perpendiculaire au plan 61, si bien que la coopération des organes d'encliquetage 113 et 114 avec les encoches 109 et 110 est propre à s'opposer à une rotation relative des deux fourreaux 83 et 67 autour de l'axe 28, même en l'absence de goupille 94.

Bien que d'autres modes de réalisation puissent être prévus, les deux organes d'encliquetage 113 et 114 sont constitués, dans l'exemple illustré, par des extrémités libres respectives, recourbées vers l'axe 28, perpendiculairement à celui-ci, de deux branches 117, 118 d'un étrier 120 présentant par ailleurs une âme 121 raccordant mutuellement les branches 117 et 118 à l'opposé de leurs extrémités définissant les organes d'encliquetage 113, 114 ; ces deux branches 117 et 118 de l'étrier 120, disposées symétriquement l'une de l'autre par rapport à l'axe 28, sont sensiblement parallèles à ce dernier et longent la face périphérique extérieure 68 du fourreau 67 du niveau des lumières 111, 112 jusqu'à l'extrémité antérieure 74 du fourreau 67, au niveau de laquelle ces branches sont raccordées par l'âme 121, transversale par rapport à l'axe 28 et percée suivant cet axe d'un alésage 122 à l'intérieur duquel s'emboîte étroitement la zone 81 du guide-câble 79, à la fois pour retenir l'étrier 120 et pour en protéger le câble 21 ; par élasticité de ses branches 117 et 118, l'étrier 120 tend à retenir les organes d'encliquetage 113 et 114 dans une position dans laquelle ils forment une saillie vers l'axe 28 par rapport à la face périphérique intérieure 75 du fourreau 67, c'est-à-dire notamment à l'intérieur des encoches 109 et 110 dans la position de montage illustrée.

Comme le verra plus loin, les organes d'encliquetage 113 et 114 peuvent ainsi également s'engager entre deux dents 101 et deux dents 102, respectivement, ce qui correspond à une position d'utilisation du dispositif selon l'invention ; en outre, ils peuvent s'engager dans des encoches respectives 123, 124 aménagées symétriquement l'une de l'autre par rapport à l'axe 28, perpendiculairement au plan 12, dans la face périphérique extérieure 84 du fourreau 83 ; ces deux encoches 123, 124 sont situées, en référence à l'axe 28, soit au même niveau que les encoches 109 et 110, soit légèrement en avant de ce niveau, et dans des dièdres respectifs d'angle β inférieur à 90°, en référence à l'axe 28, lesquels dièdes sont décalés angulairement par rapport aux dièdres d'angle α dans lesquels se situent les jeux 99, 100 de dents 101 et 102, par exemple de 90° ; lorsque la goupille 94 est cassée, on peut en agissant sur les méplats 92 et 93 du tronçon 90, formant zone de commande à cet effet, une rotation du fourreau 83 à l'intérieur du fourreau 67 de 90°, dans un sens ou dans l'autre, autour de l'axe 28 ; à la différence des dents 101 et 102, les encoches 123 et 124 sont délimitées respectivement vers l'avant et vers l'arrière, en référence au sens 29, par des faces respectives 138, 139 et 140, 141 perpendiculaires à l'axe 28 ; vers ce dernier, elles sont délimitées par des fonds respectifs 125, 126 plans, perpendiculaires au plan 12, de même qu'entre deux dents 101, 102 respectivement voisines est aménagé un fond interdentaire respectif 127, 128 également plan, quant à lui perpendiculaire au plan 61.

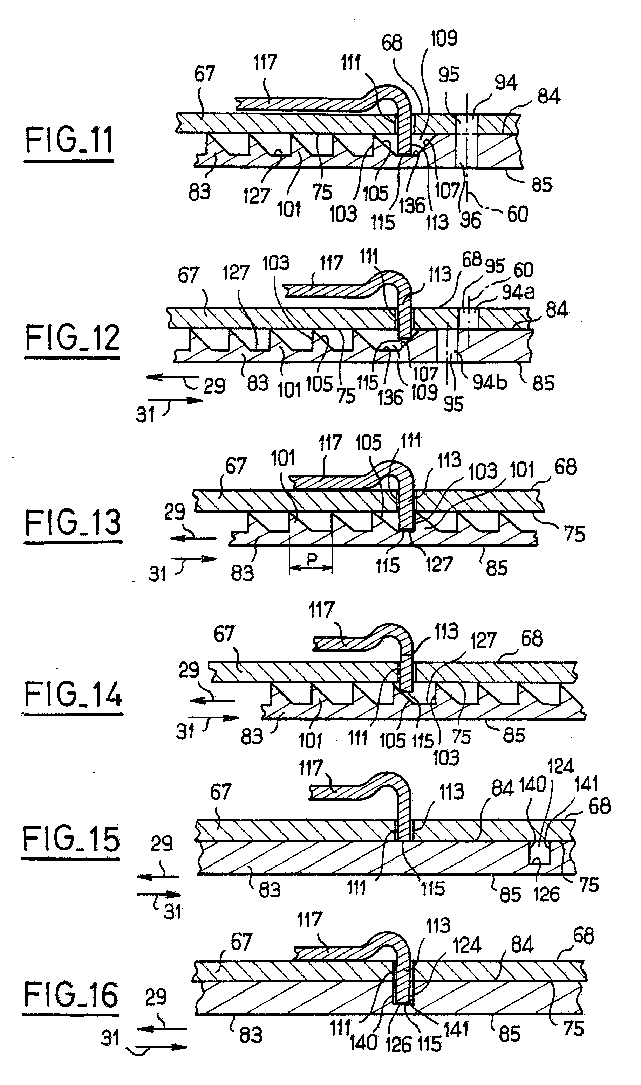

Dans ces conditions, le dispositif selon l'invention fonctionne de la façon qui va être décrite à présent, en référence plus particulièrement aux figures 11 à 16 qui illustrent en détail le fonctionnement de la goupille 94, de l'organe d'encliquetage 113 prévu sur la branche 117 de l'étrier 120, de l'encoche 109, des dents 101 du jeu 99 de dents et de l'encoche 124 étant bien entendu que, par raison de symétrie, l'organe d'encliquetage 114 coopère de la même façon avec l'encoche 110, les dents 102 du jeu 100 et l'encoche 123, comme le comprendra aisément un Homme du métier.

On supposera que, initialement, le support 3 a été fixé par l'ouverture 2 dans la zone de plancher 1 du véhicule, et que le levier 13 occupe sa position de non-freinage illustrée à la figure 1 ; par contre, le câble de freinage 21 n'est raccordé ni au levier 13, ni à l'organe de freinage 48 et, alors que la gaine 43 peut éventuellement être déjà raccordée à l'organe de freinage 47 et insérée à l'intérieur du fourreau 83 dans une position telle que son extrémité 44 soit en butée contre la collerette 86 de celui-ci, l'ensemble formé par les moyens 49 de raccordement de la gaine 45 avec le support 3 n'est pas encore monté sur celui-ci ; en d'autres termes, la bague de butée fixe 52 n'est pas encore insérée dans le trou 51 de la paroi 50.

Les moyens 49 se présentent alors cependant dans l'état illustré aux figures 1, 4, 5 et 11, la goupille 94 logée dans les alésages 95 et 96 verrouillant mutuellement les deux fourreaux 67 et 83 dans une position dans laquelle les organes d'encliquetage 113 et 114 sont engagés dans les encoches 109 et 110, respectivement alors que la collerette 69 est simplement placée en appui contre la bague de butée mobile 62, elle-même simplement placée en appui contre la bague de butée fixe 52, dans les positions relatives décrites précédemment ; les différents composants des moyens 49 se présentent alors dans une position relative de livraison et de montage sur le support 3, visible à la figure 11 en ce qui concerne les composants apparaissant sur cette figure.

Les composants des moyens 49 étant maintenus dans cette position relative de livraison et de montage, on introduit dans le trou 51, depuis le dessous du véhicule et depuis l'extérieur du boîtier inférieur 5, l'ensemble formé par les moyens de raccordement 49, la gaine 43 et le câble de freinage 21 dont on immobilise provisoirement l'extrémité 46, par rapport à l'extrémité 45 de la gaine 43, de telle sorte qu'il forme en avant du fourreau 67, et plus précisément du guide-câble 79, en référence au sens 29, une saillie sensiblement identique à celle qu'il forme dans la position illustrée à la figure 1, c'est-à-dire alors que la tête 27 est engagée dans l'encoche 25 et que le levier 13 occupe sa position de non-freinage.

Au fur et à mesure de ce mouvement, qui s'effectue tangentiellement à la zone du canal 20 la plus basse, c'est-à-dire à l'extrémité 23 de ce canal 20, dans le sens 29, le fourreau 67 s'engage progressivement à l'intérieur du boîtier inférieur 5 puis, progressivement, il en est de même successivement des tronçons 54 et 53 de la bague de butée fixe 52, jusqu'à ce que celle-ci vienne en appui par l'épaulement 56 de son tronçon 55 contre la paroi 50, à l'extérieur du boîtier inférieur 5 ; simultanément, la tête 27 du câble de freinage 21, lequel présente une rigidité suffisante pour l'empêcher de fléchir au cours de ce mouvement, s'engage dans la goulotte 40 puis parcourt successivement cette goulotte 40 et la goulotte 39, dans le sens 29 ; au cours de ce mouvement, cette tête 27 est poussée élastiquement vers le canal 20, par la languette 32, mais ne peut pénétrer dans ce canal 20 pour des raisons de dimension, tant qu'elle n'est pas parvenue immédiatement en dessous de l'encoche 25 ; de ce fait, tant que la tête 27 n'est pas parvenue en regard de l'encoche 25, la languette 32 fléchit progressivement vers le bas mais dès que la tête 27 atteint l'encoche 25, et peut de ce fait pénétrer dans celle-ci suivant une direction approximativement radiale par rapport à l'axe 11, la languette 32 se détend vers le haut et provoque l'emboîtement de la tête 27 dans l'encoche 25 ; la saillie formée par l'extrémité 23 du câble de freinage 21 en avant du guide-câble 79 est choisie de telle sorte que cet emboîtement soit simultané à l'arrivée de l'épaulement 56 de la bague de butée fixe 52 contre la paroi 50, autour du trou 51 ; compte tenu des formes respectives, complémentaires, du trou 51 et du tronçon 53 de la bague de butée fixe 52, cette dernière est alors immobilisée à l'encontre d'une rotation autour de l'axe 28, par rapport au boîtier inférieur 5, dans une position dans laquelle l'axe 60 est horizontal.

Naturellement, tout moyen d'étanchéification, non représenté, peut être prévu entre la bague 52 et la paroi 50, d'une part, entre la bague 62 et la bague 52, d'autre part, ainsi qu'entre la bague 62 et le fourreau 83.

De préférence, on fixe alors l'extrémité 46 du câble 21 sur l'organe de freinage 48, de telle sorte que les moyens de sollicitation élastique 30 imposent au câble de freinage 21 une tension prédéterminée, en tendant à faire sortir ce câble par l'extrémité 45 de la gaine 43 alors que l'extrémité 44 de celle-ci est retenue par le fourreau 83 lui-même immobilisé par rapport au fourreau 67, et que la tête 27 est retenue dans l'encoche 25 ; on remarquera que cette sollicitation élastique de mise en tension du câble 21 est suffisante pour maintenir l'appui de la bague 62 contre la bague 52 et de la bague 52 contre la paroi 50, dans le sens 29 ; des moyens auxiliaires de fixation, non représentés, peuvent toutefois être prévus.

A la fin de cette opération de montage, le dispositif de commande frein à main selon l'invention se présente comme il est illustré aux figures 1 à 5 ainsi qu'à la figure 11 ; les moyens de raccordement 49 sont alors impropres à permettre un quelconque rattrapage d'allongement du câble de freinage 21 par rapport à la gaine 43 en raison de l'immobilisation relative des fourreaux 67 et 83 par la goupille 94.

Pour rendre les moyens de raccordement 49 propres à remplir cette fonction, il est nécessaire de rompre la goupille 94, par cisaillement, par un procédé illustré à la figure 12 ; à cet effet, on applique volontairement au tronçon 90 du fourreau 83, en saillie hors du fourreau 67 et hors du véhicule, sous celui-ci, une poussée dans le sens 29 par rapport au fourreau 67 ; on remarquera que les organes de verrouillage 113 et 114 ne s'opposent pas à ce mouvement qui provoque leur montée progressive sur les faces 107 et 108 des encoches 109 et 110, comme on l'a illustré à propos de l'organe de verrouillage 113 et de l'encoche 109 à la figure 12 ; les tronçons 94a et 94b de la goupille 94 correspondant respectivement à l'alésage 95 et à l'alésage 96 restent emprisonnés respectivement dans ces alésages, ce qui est sans conséquence pour la suite du fonctionnement du dispositif.

Les deux fourreaux 83 et 67 sont alors libres de se déplacer l'un par rapport à l'autre suivant l'axe 28.

De ce fait, lorsqu'on relâche ensuite la poussée appliquée au fourreau 83 dans le sens 29, ce dernier, sollicité dans le sens opposé 31 par le ressort 89, coulisse dans ce sens 31, par rapport au fourreau 67, en entraînant avec lui la gaine 43, jusqu'à ce qu'un équilibre s'établisse entre les actions respectives du ressort 89, convenablement calculé à cet effet, et des moyens de sollicitation élastique 30 ; on remarquera que la forme des dents 101 et 102 rend ce mouvement possible, dans la mesure où, lors de ce mouvement, les organes d'encliquetage 113 et 114 peuvent successivement être repoussés vers l'extérieur par les faces obliques 105, 106 des dents, puis revenir élastiquement, sous l'action des branches 117 et 118 de l'étrier élastique 120, contre les fonds interdentaires 127 et 128, en se plaçant en regard des faces 103, 104 des dents 101, 102 perpendiculaires à l'axe 28 ; précisément, lorsqu'un équilibre s'est établi entre les actions respectives du ressort 89 et des moyens de sollicitation élastique 30, les organes d'encliquetage 113 et 114 occupent une position illustrée à la figure 13 à propos de l'organe 113, dans laquelle ils s'appliquent par leurs bords 115 et 116 contre des fonds interdentaires 127, 128 et, ainsi, coopèrent avec les faces 103, 104 des dents 101, 102 placées immédiatement en arrière, en référence au sens 29, pour constituer de ce fait une butée s'opposant à un mouvement du fourreau 83 dans le sens 29 à l'intérieur du fourreau 67.

Alors, si on déplace le levier 13 dans le sens 17 de sa position de non-freinage à sa position de freinage, ce qui applique à la tête 27 du câble de freinage 21 une traction dans le sens 17, au niveau de l'encoche 25, et au câble de freinage 21 une traction dans le sens 29 qui, compte tenu du caractère constamment tangentiel de l'axe 28 par rapport à la ligne moyenne 129 du canal 20, se confond avec le sens 17 à chacun des points de contact tangentiel successifs de l'axe 28 avec la ligne moyenne 129 ; compte tenu de ce que l'extrémité 44 de la gaine 45 est en appui contre la collerette 86 du fourreau 83 lui-même en appui, par l'intermédiaire des organes d'encliquetage 113 et 114, dans le même sens 29, contre le fourreau 67, le câble 21 se déplace dans le sens 29 à l'intérieur de la gaine 43 et son extrémité 46 sollicite l'organe de freinage 48 vers l'organe de freinage 47 solidaire de l'extrémité 45 de la gaine 43, en appliquant un surcroît de contrainte aux moyens de sollicitation élastique 30.

Lorsque, ensuite, on ramène le levier 13 dans le sens 19 à la position de non-freinage, les moyens de sollicitation élastique 30 se détendent, ramenant les organes de freinage 47 et 48 et, avec eux, les extrémités 45 et 46 respectivement de la gaine 43 et du câble de freinage 21 à leurs positions initiales.

Si aucun allongement du câble de freinage 21 par rapport à la gaine 43 ne s'est manifesté, à la position relative ainsi atteinte par les extrémités respectives 46 et 45 de la gaine 43, laquelle est imposée par le débattement relatif nécessairement limité des organes de freinage 47 et 48, correspond une position relative inchangée de l'extrémité 23 du câble de freinage 21 et de l'extrémité 44 de la gaine 43 ; de ce fait, à la position de l'encoche 25 et de la tête 27 correspondant à la position de non-freinage correspond une position inchangée de l'extrémité 44 de la gaine 45.

Si, par contre, un allongement du câble de freinage 21 par rapport à la gaine 43 s'est manifesté, au positionnement relatif déterminé obtenu pour les extrémités 45 et 46 de la gaine 43 et du câble de freinage 21 et au positionnement de l'encoche 25 et de la tête 27 correspondant à la position de non freinage, imposé par contact du levier 13, dans le sens 19, contre la butée fixe 130 du capot supérieur 6 du support 3, correspond une position de l'extrémité 44 de la gains 43 décalée dans le sens 31, par rapport à la position précédente, d'une valeur correspondant à l'allongement relatif du câble de freinage 21 ; si cet allongement est inférieur à la valeur d'un pas, défini comme la distance p séparant, dans le sens 31, les faces respectives 103 ou 104 de deux dents 101 ou 102 immédiatement voisines, le retour du levier 13 à la position de non-freinage s'accompagne d'un déplacement du fourreau 83 dans le sens 31 par rapport au fourreau 67, d'une amplitude telle qu'au lieu de s'appliquer contre le fond interdentaire 127, 128 contre lequel il était appliqué précédemment, le bord d'extrémité 115, 116 des organes d'encliquetage 113, 114 vienne au contact de la face oblique 105, 106 de la dent 101, 102 immédiatement voisine, dans le sens 29 ; cette position est illustrée à la figure 14 ; si, par contre, l'amplitude de ce mouvement est au moins égale à un pas p, les organes d'encliquetage 113 et 114 franchissent totalement la dent immédiatement voisine dans le sens 29 et viennent se placer en regard des faces transversales 103, 104 de ces dents immédiatement voisines, en s'appliquant contre les fonds interdentaires 127, 128 correspondants ; on retrouve ainsi la position illustrée à la figure 13, avec toutefois décalage du fourreau 83 par rapport au fourreau 67 dans le sens 31, de la valeur d'un pas p.

Au fur et à mesure de l'allongement du câble de freinage 21 par rapport à la gaine 43, au cours de la vie du véhicule, ce phénomène peut se reproduire jusqu'à ce que les organes d'encliquetage 113 et 114 parviennent en regard de la face transversale 103, 104 de la dernière des dents 101 et 102 des jeux 99 et 100, dans le sens 29 ; avantageusement, à cette dernière dent succède dans le sens 29 une encoche respective 131, 132 en tout point identique aux encoches 123, 124, c'est-à-dire notamment délimitée vers l'avant, dans le sens 29, par une face 133, 134 plane, perpendiculaire à l'axe 28, de telle sorte que l'engagement des organes d'encliquetage 113 et 114 dans les encoches 131 et 132 empêche tout mouvement ultérieur du fourreau 83 dans le sens 31 par rapport au fourreau 67.

On remarquera que les formes respectives des bords 115, 116 des organes d'encliquetage 113 et 114, des fonds interdentaires 127 et 128, des faces obliques 105, 106 des dents 101, 102 et des fonds respectifs 142, 143, identiques aux fonds interdentaires 127, 128, des encoches 131, 132 interdisent lors de ces différents déplacements du fourreau 83 par rapport au fourreau 67 toute rotation relative autour de l'axe 28.

Toutefois, on peut à volonté provoquer une telle rotation, en agissant depuis l'extérieur du véhicule, sous celui-ci, sur le tronçon 90 du fourreau 83, lorsqu'il est nécessaire d'intervenir sur le dispositif de command de freinage 4 au cours de la vie du véhicule.

Une telle rotation, facilitée par les méplats 92 et 93, est effectuée sur 90°, ce qui provoque un écartement élastique des organes d'encliquetage 113 et 114 vis-à-vis de l'axe 28 en les amenant au contact de la face périphérique extérieure cylindrique 84 du fourreau 83, dans le dièdre d'angle β comme le montre la figure 15 à propos de l'organe d'encliquetage 113 ; cette intervention n'étant généralement nécessaire qu'alors que les organes d'encliquetage 113 et 114 ont déjà franchi un certain nombre des dents 101 et 102, respectivement, si bien qu'ils sont alors placés en avant des encoches 123 et 124 en référence au sens 29, on applique alors au fourreau 83, par le tronçon 90 de celui-ci, une poussée dans le sens 29 sans nouvelle rotation par rapport au fourreau 67 pour amener les organes d'encliquetage 113 et 114 en prise respectivement dans les encoches 124 et 123, comme le montre la figure 16 à propos de l'organe 113 et de l'encoche 124 ; cette opération s'effectue en comprimant le ressort 89 ; les deux fourreaux 83 et 67 sont alors totalement immobilisés l'un par rapport à l'autre, comme ils le sont dans la position illustrée aux figures 1 à 5 et 11 et, compte tenu des possibilités limitées de débattement relatif des organes de freinage 47 et 48, le câble 21 que l'on a supposé déjà allongé est détendu, si bien qu'il est possible par exemple de le démonter ou de démonter les moyens de raccordement 49 pour tout type d'intervention ; lorsque l'intervention est terminée, on pratique une nouvelle rotation du fourreau 83 sur 90° autour de l'axe 28, à l'intérieur du fourreau 67, en agissant sur le tronçon 90 si bien que l'on rétablit une coopération entre les organes d'encliquetage 113 et 114 et les dents 101 et 102, avec sollicitation élastique du fourreau 83 par le ressort 89 à l'intérieur du fourreau 67, en contrepartie de l'action exercée par les moyens de sollicitation élastique 30, et que les moyens de raccordement 49 reprennent leur fonction de compensation automatique d'allongement du câble de freinage 21 par rapport à la gaine 43.

Naturellement, le mode de mise en oeuvre de l'invention qui a été décrit ne constitue qu'un exemple non limitatif, par rapport auquel un Homme du métier pourra prévoir de nombreuses variantes sans sortir pour autant du cadre de la présente invention ; en particulier, le levier pivotant 13 pourra être remplacé par tout autre moyen approprié de déplacement réversible de la zone d'ancrage 25 de la tête 27 du câble 21 soit dans le sens 17, soit dans le sens 29 directement en vue d'un freinage.

## Revendications

1. Dispositif de commande de frein à main, notamment pour véhicule automobile, comportant :
- un support de montage (3),
- une zone (25) d'ancrage de câble de freinage (21),
- des moyens manuels (13) de déplacement de la zone d'ancrage (25), par rapport au support (3), entre une position de freinage dans laquelle elle est susceptible d'être verrouillée par rapport au support (3) et une position de non-freinage,
- des moyens (49) de raccordement d'une gaine (43) de câble de freinage (21) au support (3) en un emplacement proche de la position de non-freinage, en arrière de celle-ci par rapport à un sens déterminé (17, 29) de déplacement de la zone d'ancrage (25) vers la position de freinage,
- une gaine (43) de câble de freinage (21), présentant une première extrémité (44) susceptible d'être raccordée au support (3) par les moyens de raccordement (49) et une deuxième extrémité (43) susceptible d'être solidarisée avec un premier organe de freinage (47),
- un câble de freinage (21) monté coulissant dans la gaine (43) et présentant une première extrémité (23) sortant de la gaine (43) par la première extrémité (44) de celle-ci et susceptible d'être ancrée sur la zone d'ancrage (25) et une deuxième extrémité (46) sortant de la gaine (43) par la deuxième extrémité (45) de celle-ci et susceptible d'être solidarisée avec un deuxième organe de freinage (48),
les premier et deuxième organes de freinage (47, 48) appliquant aux deuxièmes extrémités respectives (45, 46) de la gaine (43) et du câble (21) une sollicitation élastique tendant à faire sortir le câble (21) de la gaine (43) par la deuxième extrémité (45) de celle-ci et le passage de la zone d'ancrage (25) de la position de non-freinage à la position de freinage appliquant à la première extrémité (23) du câble (21) une sollicitation tendant à faire sortir le câble (21) de la gaine (43) par la première extrémité (44) de celle-ci,
caractérisé en ce que lesdits moyens de raccordement (49) comportent des moyens (67, 83, 89, 120) de déplacement automatique de la première extrémité (44) de la gaine (43), par rapport au support (3), en sens inverse dudit sens déterminé de déplacement (29) en fonction d'un éventuel allongement du câble de freinage (21) par rapport à la gaine (43), de façon à assurer une compensation automatique dudit éventuel allongement sans déplacer la zone d'ancrage (25) par rapport aux moyens manuels (13) de déplacement de celle-ci.

2. Dispositif selon la revendication 1, caractérisé en ce que les moyens manuels (13) de déplacement de la zone d'ancrage (25) comportent un levier de commande manuelle (13) qui est monté au pivotement sur le support (3) autour d'un axe déterminé de pivotement (11) et porte de façon solidaire ladite zone d'ancrage (25).

3. Dispositif selon la revendication 2, caractérisé en ce que le levier (13) porte de façon solidaire, en arrière de la zone d'ancrage (25) en référence à un sens déterminé de pivotement (17) correspondant au passage de la position de non-freinage à la position de freinage, un canal (20) de réception du câble de freinage (21).

4. Dispositif selon la revendication 3, caractérisé en ce que le canal de réception (20) présente une forme différente d'une forme de révolution autour dudit axe déterminé (11).

5. Dispositif selon l'une quelconque des revendications 2 à 4, caractérisé en ce que la première extrémité (23) du câble (21) présente des moyens formant une tête (27) solidaire du câble de freinage (21) et définissant un épaulement (131) autour du câble de freinage (21), vers l'arrière en référence audit sens déterminé de déplacement (29), et en ce que la zone d'ancrage (25) est constituée par une encoche ouverte vers l'avant, en référence audit sens déterminé de pivotement (17) et dans le sens d'un éloignement radial par rapport audit axe de pivotement (11) et susceptible de recevoir ladite tête (27) par emboîtement.

6. Dispositif selon la revendication 5, caractérisé en ce que le support (3) présente en regard de la position de non-freinage, dans le sens d'un éloignement radial par rapport audit axe de pivotement, une goulotte (39, 40) de guidage de ladite tête (27) dans ledit sens déterminé de déplacement (29), en ce que ladite goulotte (39, 40) présente dans le sens d'un éloignement radial par rapport audit axe de pivotement (11) des dimensions suffisantes pour autoriser le libre passage de la tête (27) à l'état non emboîté dans l'encoche (25), et en ce que le support (3) présente à l'intérieur de la goulotte (39, 40) de guidage des moyens (32) de poussée élastique de ladite tête (27) dans le sens d'un rapprochement radial par rapport audit axe de pivotement (11), pour provoquer l'emboîtement de ladite tête (27) dans l'encoche (25), en position de non-freinage, lors d'un déplacement de ladite tête (27) dans ledit sens déterminé de déplacement (29) au montage du frein.

7. Dispositif selon l'une quelconque des revendications 1 à 6, caractérisé en ce que les moyens (67, 83, 89, 120) de déplacement automatique de la première extrémité (44) de la gaine (43) par rapport au support (3), assurent ledit déplacement par pas (p),chaque fois que l'allongement du câble de freinage (21) par rapport à la gaine (43) atteint une amplitude de valeur déterminée.

8. Dispositif selon la revendication 7, caractérisé en ce que les moyens de raccordement (49) comportent :
- un fourreau (67) immobilisé par rapport au support (3) dans ledit sens déterminé de déplacement (29), et présentant un axe (28) orienté dans ledit sens (17, 29),
- un fourreau (83) mobile au coulissement dans ledit sens déterminé de déplacement (29) à l'intérieur du fourreau immobilisé (67) et coaxial à celui-ci, ledit fourreau mobile (83) recevant intérieurement la première extrémité (44) de la gaine (43) en lui offrant un appui solidaire au moins dans ledit sens déterminé de déplacement (29),
- un ressort (89) de sollicitation élastique du fourreau mobile (83) en sens inverse dudit sens déterminé de déplacement (29) par rapport au fourreau immobilisé (67), à l'intérieur de celui-ci,
lesdits fourreaux (67, 83) et ledit ressort (89) autorisant un libre passage du câble de freinage (21), et en ce que :
- le fourreau mobile (83) présente au moins un jeu (99) de dents (101) qui sont juxtaposées dans ledit sens déterminé de déplacement (29) et dont chacune présente vers l'avant, en référence à ce sens (29), une face (103) perpendiculaire à l'axe (28) des fourreaux (67, 83) et vers l'arrière, en référence à ce sens (29), une face (105) oblique par rapport à l'axe (28) des fourreaux (67, 83) et s'éloignant de celui-ci vers l'avant, en référence à ce sens (29),
- au moins un organe d'encliquetage (113) porté par le fourreau immobilisé (67), de façon fixe suivant ledit sens déterminé de déplacement (29) et en sens inverse de ce sens (29) et de façon mobile perpendiculairement à l'axe (28) des fourreaux (67, 83), ledit organe d'encliquetage (113) formant une saillie vers les dents (101) du fourreau mobile (83) à l'intérieur du fourreau immobilisé (67),
- des moyens (117) de sollicitation élastique de l'organe d'encliquetage (113) vers l'axe (28) des fourreaux (67, 83), de telle sorte que s'établisse une relation d'encliquetage unidirectionnel entre les deux fourreaux (67, 83) par l'intermédiaire de l'organe d'encliquetage (113) et des dents (101).

9. Dispositif selon la revendication 8, caractérisé en ce que le support (3) et le fourreau immobilisé (67) présentent des moyens complémentaires (52, 62) d'appui du fourreau immobilisé (67) dans ledit sens déterminé de déplacement (29) contre le support (3), laissant le fourreau immobilisé (67) libre par rapport au support (9) en sens inverse de ce sens (29).

10. Dispositif selon la revendication 9, caractérisé en ce que les moyens complémentaires d'appui (52, 62) constituent également des moyens de guidage au pivotement relatif autour d'un axe horizontal (60).

11. Dispositif selon l'une quelconque des revendications 8 à 10, caractérisé en ce qu'il comporte des moyens (94, 95, 96) d'immobilisation relative forcée du fourreau immobilisé (67) et du fourreau mobile (83), dans ledit sens déterminé de déplacement (29) et en sens inverse de ce sens (29), dans une position relative de montage telle que lesdites dents (101) soient toutes placées en avant de l'organe d'encliquetage (113) en référence audit sens déterminé de déplacement (29).

12. Dispositif selon la revendication 11, caractérisé en ce que les moyens d'immobilisation relative forcée (94, 95, 96) comportent une goupille sécable (94) de liaison entre les fourreaux (67, 83) en position de montage.

13. Dispositif selon l'une quelconque des revendications 8 à 12, caractérisé en ce qu'il comporte des moyens pour écarter à volonté l'organe d'encliquetage (113) de l'axe (28) des fourreaux (67, 83) de façon à supprimer à volonté ladite relation d'encliquetage unidirectionnel, et des moyens (113, 124) d'immobilisation relative volontaire du fourreau immobilisé (67) et du fourreau mobile (83) dans ledit sens déterminé de déplacement (29) et en sens inverse de ce sens (29) dans une position relative d'intervention telle que lesdites dents (101) soient toutes ou pratiquement toutes placées en avant de l'organe d'encliquetage (113) en référence audit sens déterminé de déplacement (29).

14. Dispositif selon la revendication 13, caractérisé en ce que le fourreau immobilisé (67) et le fourreau mobile (83) présentent des périphéries respectivement intérieure et extérieure (75, 84) cylindrique de révolution autour de l'axe (28) des fourreaux (67, 83), de façon à assurer un guidage mutuel à la fois au coulissement relatif suivant l'axe (28) des fourreaux (67, 83) et à la rotation relative autour de cet axe (28), en ce que le fourreau mobile (83) présente une zone de commande de rotation autour de l'axe (28) des fourreaux (67, 83) par rapport au fourreau immobilisé (67), ladite zone (90) de commande de rotation étant accessible par l'arrière, en référence audit sens déterminé de déplacement (29), en ce que les dents (101) sont localisées dans un premier dièdre d'angle limité ( α ), en référence à cet axe (28) des fourreaux (67, 83), sur la périphérie extérieure (84) du fourreau mobile (83), et en ce que la périphérie extérieure (84) du fourreau mobile (83) présente, dans un deuxième dièdre d'angle limité ( β ), en référence à l'axe (28) des fourreaux (67, 83), et différent du premier dièdre, au moins une encoche (124) de réception dudit organe d'encliquetage (113) dans une relation d'immobilisation du fourreau mobile (83) par rapport au fourreau immobilisé (67) dans ledit sens déterminé de déplacement (29) et en sens inverse de ce sens (29).

15. Dispositif selon l'une quelconque des revendications 8 à 14, caractérisé en ce que le fourreau mobile (83) porte un deuxième jeu (100) desdites dents (102), symétrique dudit jeu (99) par rapport à l'axe (28) des fourreaux (67, 83), en ce que le fourreau immobilisé (67) porte un deuxième organe d'encliquetage (114), symétrique dudit organe d'encliquetage (113) par rapport à l'axe (28) des fourreaux (67, 83) et muni de moyens (118) de sollicitation élastique vers cet axe (28), en ce que les moyens de sollicitation élastique (117, 118) desdits organes d'encliquetage (113, 114) sont constitués par un étrier élastique (120) commun présentant deux branches (117, 118) sensiblement parallèles à l'axe (28) des fourreaux (67, 83), longeant extérieurement le fourreau immobilisé (67), raccordées mutuellement par une âme (121) transversale par rapport à l'axe (28) des fourreaux (67, 83), placées en avant de ces derniers en référence audit sens déterminé de déplacement (29), et présentant des moyens (122) autorisant un libre passage du câble de freinage (21), et en ce que les organes d'encliquetage (113, 114) sont constitués par des extrémités libres desdites branches (117, 118), recourbées vers l'axe (28) des fourreaux (67, 83) et traversant le fourreau immobilisé (67) par des lumières localisées (111, 112) de ce dernier.

16. Dispositif selon les revendications 14 et 15 en combinaison, caractérisé en ce que la périphérie extérieure (84) du fourreau mobile (83) présente une deuxième encoche (123) de réception au deuxième organe d'encliquetage (114), symétrique de ladite encoche (124) par rapport à l'axe (28) des fourreaux (67, 83).

FIG_1

FIG_2

FIG_3

FIG_6

FIG_7

FIG_8

FIG_9

FIG_10

FIG_4

FIG_5

EP 0 327 458 A1

FIG_11

FIG_12

FIG_13

FIG_14

FIG_15

FIG_16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 479 383  (NISSAN)<br>* Page 3, ligne 8 - page 4, ligne 10; figure 2 *<br>--- | 1 | B 60 T    7/08<br>F 16 D   65/54 |
| A | DE-A-3 540 576  (NAUMANN)<br>* Colonne 8, ligne 67 - colonne 10, ligne 3; figures 8,9 *<br>--- | 1 | |
| A | EP-A-0 040 574  (PAUMELLERIE)<br>--- | | |
| A,D | FR-A-2 563 483  (PEUGEOT)<br>----- | | |

DOMAINES TECHNIQUES
RECHERCHES (Int. Cl.4)

B 60 T    7/00
F 16 D   65/00

Le présent rapport a été établi pour toutes les revendications

| Lieu de la recherche | Date d'achèvement de la recherche | Examinateur |
|---|---|---|
| LA HAYE | 10-05-1989 | HARTEVELD C.D.H. |